# EUROPEAN PATENT APPLICATION

(11) **EP 4 717 680 A1**
(43) Date of publication of application: **01.04.2026**
(21) Application number: 24202864.5
(22) Date of filing: 26.09.2024
(51) Int. Cl.: C03B 9/325, C03B 9/34, C03B 9/38

(54) **NECK RING SYSTEM FOR MOLDING GLASSWARE**

(30) Priority: 25.09.2024 PT 2024119716
(71) Applicant: Sousa Rocha, Luis Manuel De, 2430-091 Marinha Grande (PT)
(72) Inventor: Sousa Rocha, Luis Manuel De, 2430-091 Marinha Grande (PT)
(74) Representative: Pereira da Cruz, Joao

(57) **Abstract**

The present invention refers to the field of glass manufacturing engineering, in particular glass molding technology for shaping glass bottle necks. The object of the present invention is a neck ring system for molding glassware comprising one insert ring embedded in one external ring, wherein the insert ring comprises two semi-annular insert ring half bodies (10) and the external ring comprises two semi-annular external ring half bodies (20). Between the insert ring embedded in the external ring, at least one inner channel (30) is formed and at least one outer channel is connected to the at least one inner channel and to the external surface of said semi-annular external ring half body (20), to facilitate the cooling of the two semi-annular insert ring half bodies (10) of the insert ring, which are in contact with molten glass at high temperatures. The insert ring being separated from the external ring facilitates repair, replacement and maintenance operations.

## Description

### FIELD OF THE INVENTION

The present invention refers to the field of glass manufacturing engineering, in particular glass molding technology for shaping glass bottle necks.

### PRIOR ART

In the glass manufacturing processes, molds are used to chape the miscellaneous forms of glass products, such as bottles or containers.

In particular, neck rings are very important for the shaping of the upper part of the bottle, including the neck of the bottle and the grooved finishing that interacts with bottle capping elements, such as corks or caps, as neck rings are responsible for a consistent and precise shaping of these features.

Neck rings and other molds used to shape glassware need to be sturdy and resistant to high-temperatures, as they are repeatedly in contact with molten glass, which can lead to deformation and wear, especially on the surfaces in contact with the molten glass. Therefore, the mold components are usually made of resistant metal alloys, often comprising bronze and aluminum.

Neck rings consist in two semi-annular halves that are joined to form a hollow ring structure, in which the inner surface is carved to shape the molten glass that is pressed against said inner surface, thus acquiring the desired shape of the glassware. Most common shapes involve grooves or threads to which a bottle cap may be threaded.

Due to the importance of these components in the glassware manufacturing process, neck rings are often subjected to a rigorous quality control, to ensure that precision standards are maintained during repeated use and prolonged exposure high-temperatures, which can wear the molding surface of the neck ring over time.

If the neck ring is damaged and the tolerated metric measurements are exceeded, the damaged neck ring is discarded. If the damage done to the neck ring is within the tolerated metric measurements, the neck ring is subjected to maintenance or repair procedures to restore the high precision of the neck ring.

The most common method to repair the wear of the neck ring is soldering the damaged edges. Alternatively, the molding surface of the neck ring can be soldered and then subjected to precision milling to achieve the correct measurements intended for the desired shape of the glassware. This process ensures that the higher quality standards are met, however it is a laborious process that is time consuming and significantly expensive.

The proposed invention provides an innovative solution to minimize the damage of the neck rings and also to facilitate the repair of neck ring components to improve the efficiency of the glassware manufacturing process.

### SUMMARY OF THE INVENTION

It is an object of the present invention a neck ring system for molding glassware comprising one insert ring embedded in one external ring, wherein the insert ring comprises two semi-annular insert ring half bodies (10), each semi-annular insert ring half body (10) comprising a glass-contacting surface shaped for the molding of glassware, at least two insert ring junction surfaces (11), one external surface; the external ring comprises two semi-annular external ring half bodies (20), each semi-annular external ring half body (20) comprising an internal cavity adapted to receive the external surface of one semi-annular insert ring half body (10), at least two external ring junction surfaces (21) and one external surface; being each semi-annular insert ring half body (10) and each semi-annular external ring half body (20) adapted to form at least one inner channel (30) between the external surface of each semi-annular insert ring half body (10) and the internal cavity of each semi-annular external ring half body (20), and each semi-annular external ring half body (20) further comprising at least one outer channel (40) connected to the at least one inner channel (30) and to the external surface of said semi-annular external ring half body (20).

In an advantageous aspect of the present invention, the insert ring being separated from the external ring facilitates all repair and maintenance procedures, in that only the two semi-annular insert ring half bodies (10) are repeatedly in contact with molten glass at high temperatures, and therefore only the semi-annular insert ring half bodies (10) may need repairing or replacement. Moreover, the smaller size of the semi-annular insert ring half bodies (10) compared to traditional neck ring halves, also minimizes the costs of repair and/or production of new semi-annular insert ring half bodies (10) to replace damaged parts. In addition, the separation between the insert ring and external ring minimizes the heat transfer from the molten glass to the external ring, in that the insert ring and external ring do not form a single body, which extends the lifetime of the external ring.

In another advantageous aspect of the present invention, the inner channels (30) formed between the two semi-annular insert ring half bodies (10) and the two semi-annular external ring half bodies (20) facilitates the cooling of the two semi-annular insert ring half bodies (10), which are in contact with molten glass at high temperatures, by allowing the flowing of air, or other cooling fluids, fed by the outer channels (40). The flowing of air or cooling fluids in the outer and inner channels (30) promotes heat dissipation which allows the two semi-annular insert ring half bodies (10) and the two semi-annular external ring half bodies (20) to dissipate heat more efficiently, thus minimizing heat damage and extending the lifetime of the components.

### DESCRIPTION OF THE FIGURES

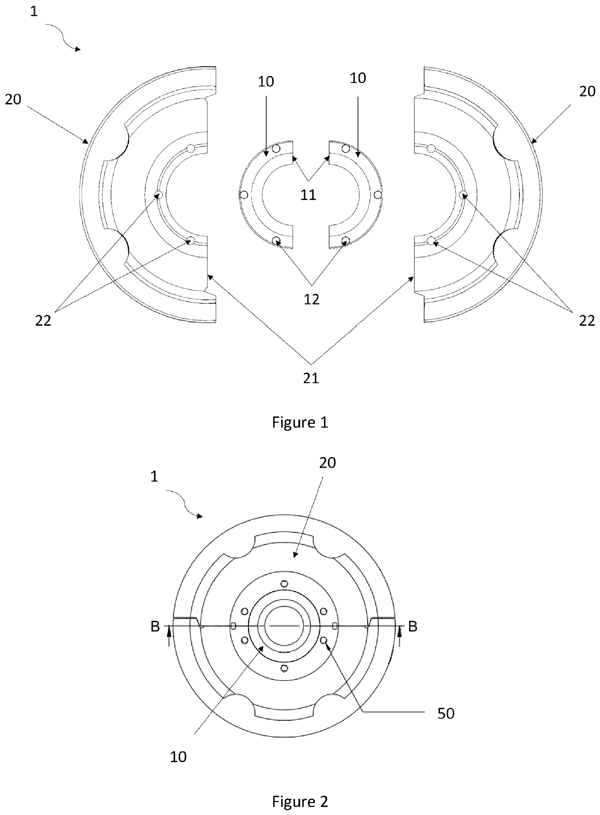

Figure 1 illustrates a top exploded view of the neck ring system, wherein two semi-annular insert ring half bodies (10) are positioned on the inner circle of the neck ring system, and two semi-annular external ring half bodies (20) are positioned on the outer circle of the neck ring system. Upon assembly of the neck ring system, the insert ring junction surfaces (11) of each two semi-annular insert ring half bodies (10) are brought together to form the insert ring, and the external ring junction surfaces (21) are also brought together to form the external ring of the neck ring system. The external surface of the insert ring is fitted inside the internal cavity of the external ring, resulting in the assembled configuration of the neck ring system.
Figure 2 illustrates a top view of the assembled neck ring system, comprising six locking elements (50) to tightly secure the insert ring and external ring and prevent any movement during glassware manufacturing.

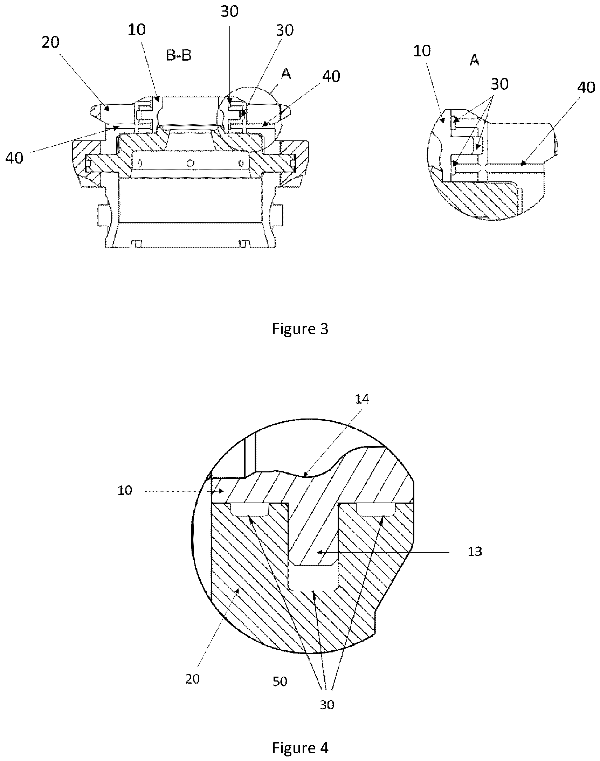

Figure 3 illustrates a cross-section B-B of the assembled neck ring system. Three inner channels (30) are shown in each side of the cross-section, formed between each semi-annular insert ring half body (10) and each semi-annular external ring half body (20), being in communication with a plurality of outer channels (40) to facilitate the cooling and heat dissipation of the neck ring system (1).
Figure 4 illustrates a cross section of the union between each semi-annular insert ring half body (10) and each semi-annular external ring half body (20), in which three inner channels (30) are formed. The outer lip (13) of the semi-annular insert ring half body (10) is inserted in the internal cavity of the semi-annular external ring half body (20), being an inner channel (30) formed on the external surface of the outer lip (13).

### DETAILED DESCRIPTION

The more general and advantageous configurations of the present invention are described in the Summary of the Invention. Such configurations are detailed below in accordance with other advantageous and/or preferred embodiments of implementation of the present invention.

In a preferred embodiment of the present invention, at least one inner channel (30) positioned between the external surface of a first semi-annular insert ring half body (10) and the internal cavity of a first semi-annular external ring half body (20) is in communication with at least one inner channel (30) positioned between the external surface of a second semi-annular insert ring half body (10) and the internal cavity of a second semi-annular external ring half body (20) to form at least one circular channel. The circular channel is formed once the insert ring and external ring are assembled together and the ends of the inner channel (30) of each half of the neck ring system are brought together at the junction surfaces. The circular channel promotes an even heat dissipation around the insert ring, thus minimizing heat damage over extended use.

In a preferred embodiment of the present invention, each semi-annular insert ring half body (10) comprises an outer lip on the external surface and the internal cavity of each semi-annular external ring half body (20) comprises a groove adapted to receive the outer lip of said semi-annular insert ring half body (10), so that each semi-annular insert ring half body (10) can be tightly fitted into each semi-annular external ring half body (20) through the interaction of the outer lip and the corresponding groove.

In addition, the outer lip of each semi-annular insert ring half body (10) and the groove of the internal cavity of each semi-annular external ring half body (20) are adapted to form one channel between the external surface of the semi-annular insert ring half body (10) and the internal cavity of the semi-annular external ring half body (20), to provide additional heat dissipation of the neck ring system, wherein the channel formed between the external surface of outer lip of the semi-annular insert ring half body (10) and the internal cavity of the semi-annular external ring half body (20) has a larger area for heat dissipation by being positioned around the outer lip of the semi-annular insert ring half body (10), resulting in a wider circular channel once the neck ring system is assembled.

In a preferred embodiment of the present invention, each semi-annular insert ring half body (10) comprises at least two inner holes (12); each semi-annular external ring half body (20) comprises at least two outer holes (22); being each inner hole (12) of each semi-annular insert ring half body (10) aligned with one outer hole (22) of each semi-annular external ring half body (20) to form one locking hole.

In a preferred embodiment of the present invention, the inner holes (12) of each semi-annular insert ring half body (10) are positioned on the outer lip of said semi-annular insert ring half body (10). The neck ring system further comprises at least four locking elements (50), being each locking element (50) adapted fit one locking hole.

In an advantageous aspect of the present invention, the locking elements (50) are fitted inside the locking holes to firmly lock in place the insert ring and the external ring to prevent the movement of the parts during the molding of molten glass, thus ensuring the precision of the molding procedure. The locking elements (50) may be selected from the group of locking elements (50): rivet, screw, bolt, stud, pin.

Preferably, the neck ring system comprises at least six locking elements (50) fitted, each one fitted in one locking hole, evenly distributed between the two halves of the neck ring system to tightly secure the insert ring and outer ring together.

Of course, the preferred embodiments shown above are combinable, in different possible configurations, being the present invention not limited to the embodiments previously described.

## Claims

1. A neck ring system (1) for molding glassware comprising one insert ring embedded in one external ring, wherein the insert ring comprises two semi-annular insert ring half bodies (10), each semi-annular insert ring half body (10) comprising a glass-contacting surface (14) shaped for the molding of glassware, at least two insert ring junction surfaces (11), one external surface; the external ring comprises two semi-annular external ring half bodies (20), each semi-annular external ring half body (20) comprising an internal cavity adapted to receive the external surface of one semi-annular insert ring half body (10), at least two external ring junction surfaces (21) and one external surface; being each semi-annular insert ring half body (10) and each semi-annular external ring half body (20) adapted to form at least one inner channel (30) between the external surface of each semi-annular insert ring half body (10) and the internal cavity of each semi-annular external ring half body (20), and each semi-annular external ring half body (20) further comprising at least one outer channel (40) connected to at least one inner channel (30) and to the external surface of said semi-annular external ring half body (20).

2. A neck ring system according to claim 1 wherein at least one inner channel (30) positioned between the external surface of a first semi-annular insert ring half body (10) and the internal cavity of a first semi-annular external ring half body (20) is in communication with at least one inner channel (30) positioned between the external surface of a second semi-annular insert ring half body (10) and the internal cavity of a second semi-annular external ring half body (20) to form at least one circular channel.

3. A neck ring system according to any of the preceding claims wherein each semi-annular insert ring half body (10) comprises an outer lip (13) on the external surface; and the internal cavity of each semi-annular external ring half body (20) comprises a groove adapted to receive the outer lip of said semi-annular insert ring half body (10).

4. A neck ring system according to claim 3 wherein the outer lip of each semi-annular insert ring half body (10) and the groove of the internal cavity of each semi-annular external ring half body (20) are adapted to form one channel between the external surface of the semi-annular insert ring half body (10) and the internal cavity of the semi-annular external ring half body (20).

5. A neck ring system according to any of the preceding claims wherein each semi-annular insert ring half body (10) comprises at least two inner holes (12); each semi-annular external ring half body (20) comprises at least two outer holes (22); being each inner hole (12) of each semi-annular insert ring half body (10) aligned with one outer hole (22) of each semi-annular external ring half body (20) to form one locking hole.

6. A neck ring system according to claim 5 comprising at least four locking elements (50), being each locking element (50) adapted fit one locking hole.

7. A neck ring system according to claims 5 - 6 comprising at least six locking holes and at least six locking elements (50).

8. A neck ring system according to claims 5 - 7 wherein the locking element (50) is selected from the group of locking elements (50): rivet, screw, bolt, stud, pin.

9. A neck ring system according to claims 5 - 8 wherein the inner holes (12) of each semi-annular insert ring half body (10) are positioned on the outer lip of said semi-annular insert ring half body (10).
